# EUROPÄISCHE PATENTSCHRIFT

(11) **EP 3 057 901 B1**
(45) Veröffentlichungstag und Bekanntmachung des Hinweises auf die Patenterteilung: **30.05.2018**
(21) Anmeldenummer: 14789789.6
(22) Anmeldetag: 14.10.2014
(51) Int. Cl.: B66B 1/34

(54) **CODIERUNGSVORRICHTUNG SOWIE POSITIONSBESTIMMUNGSVORRICHTUNG UND -VERFAHREN**
CODING DEVICE AS WELL AS POSITION DETERMINATION DEVICE AND METHOD
DISPOSITIF DE CODAGE AINSI QUE DISPOSITIF ET PROCÉDÉ DE DETERMINATION DE LA POSTION

(30) Priorität: 14.10.2013 EP 13004910
(43) Veröffentlichungstag der Anmeldung: 24.08.2016
(73) Patentinhaber: Cedes AG, 7302 Landquart (CH)
(72) Erfinder: SCHATT, Michael, CH-8808 Pfäffikon (CH); GRAF, Marco, CH-9472 Grabs (CH)
(74) Vertreter: Otten, Roth, Dobler & Partner mbB Patentanwälte
(86) Internationale Anmeldenummer: PCT/EP2014/002765
(87) Internationale Veröffentlichungsnummer: WO 2015/055299

(56) Entgegenhaltungen:
- EP-A1- 0 722 903
- EP-A1- 2 540 651
- US-A- 4 433 756

## Beschreibung

Die Erfindung betrifft eine Codierungsvorrichtung zur Markierung von Positionen in einem Aufzugschacht und zur Positionsbestimmung der Position von Aufzugkabinen im Aufzugschacht, ein computerimplementiertes Verfahren zur Bestimmung der Position einer Aufzugskabine in einem Aufzugschacht anhand einer Codierungsvorrichtung sowie eine Positionsbestimmungsvorrichtung nach dem Oberbegriff des Anspruchs 13.

Aus dem Stand der Technik ist beispielsweise aus der EP 0 722 903 B1 ein Verfahren bekannt, bei dem eine Aufzugkabine im Aufzugschacht entlang einem Codeband verfahren wird, wobei die Aufzugkabine über einen Detektor verfügt und dann, wenn der Detektor auf ein Bildmuster stößt, das am Codeband angebracht ist, dieses mit einem Referenzmuster verglichen und aus dem erkannten Muster eine Information für die Steuerung abgeleitet wird.

Aufgabe der Erfindung ist es, ein Codeband, ein Positionsbestimmungsverfahren sowie eine Positionsbestimmungsvorrichtung bereitstellen zu können, die eine erhöhte Sicherheit beim Betrieb des Aufzugs ermöglichen.

Die Aufgabe wird, ausgehend von einer Codierungsvorrichtung, einem Positionsbestimmungsverfahren sowie einer Positionsbestimmungsvorrichtung der eingangs genannten Art durch die Merkmale der Ansprüche 1, 8 bzw. die kennzeichnenden Merkmale des Anspruchs 13 gelöst.

Durch die in den Unteransprüchen genannten Maßnahmen sind vorteilhafte Ausführungen und Weiterbildungen der Erfindung möglich.

Die Erfindung stellt zum einen ein Codeband zur Verfügung, bei dem zwar diskrete Positionen markiert werden, diese jedoch in einer solchen Dichte angebracht sein können, dass die Aufzugkabine praktisch permanent ihre Position auslesen kann. Die Kontrolleinheit zur Kontrolle der Aufzugfahrt, das heißt deren Regelung und/oder Steuerung, kann also permanent mit der Information über die aktuellen Position der Fahrkabine versorgt werden, und es gibt praktisch keine Wegstrecken, auf denen die Fahrkabine "blind", das heißt ohne konkrete Positionsinformation verfahren wird und erst dann reagieren kann, wenn sie auf eine Markierung stößt, welche zum Beispiel das Abbremsen der Kabine veranlassen soll. Durch diese Maßnahme wird ein hohes Maß an Sicherheit beim Betrieb des Aufzugs ermöglicht. Zudem bietet die Erfindung einen zuverlässigen und sicheren Betrieb der Aufzugkabine, weil die Art der Codierungsvorrichtung und des computerimplementierten Verfahrens zur Positionsbestimmung Überprüfungsmöglichkeiten, Redundanzen und Plausibilitätsprüfungen ermöglicht, durch welche hohe Sicherheitsstandards erreicht werden können. Insbesondere wird es auch ermöglicht, Positionen dann noch auslesen zu können, wenn das Codeband zum Beispiel verschmutzt wird und aufgrund dessen nicht mehr alle dort enthaltenen Informationen ausgelesen werden können.

Ein weiterer Vorteil der Erfindung besteht darin, dass gerade im Zusammenhang mit der Verwendung einer Codierungsvorrichtung gemäß einem Ausführungsbeispiel der Erfindung mit Lagerungsvorrichtungen zudem die Möglichkeit besteht, den Prozess des Sich-Setzens eines neu gebauten Gebäudes bei der Auswertung und Positionsbestimmung der Aufzugkabine berücksichtigen zu können und sogar eine Korrektur der Positionsbestimmung durchführen zu können. Neu errichtete Gebäude besitzen meist die Eigenschaft, dass sie sich mit der Zeit "setzen", das heißt aufgrund der hohen Gewichtsbelastungen es im Laufe der Zeit zu Stauchungen im Gebäude kommen kann. Gerade bei hohen Gebäuden, die meist über einen Aufzug verfügen, kann dieser Effekt auftreten. Besonders problematisch ist an diesem bauphysikalischen Effekt, dass nicht alle Teile des Gebäudes gleichmäßig davon betroffen sind. Insbesondere ist in der Regel das Aufzuggerüst, in dem die Fahrkabine verfahrbar gelagert ist, nicht oder zumindest nur teilweise davon betroffen. In einem solchen Fall bedeutet das teilweise Stauchen der Gebäudewand, dass sich auch die Fahrkabinen gegenüber dem Gestell des Aufzugsschachts verschieben. Eine derartige Korrektur, welche durch die Erfindung ebenfalls ermöglicht wird, kann dieses Phänomen des Sich-Setzens eines Gebäudes ausgleichen. Hierdurch kann insbesondere die Sicherheit und Zuverlässigkeit beim Betrieb des Aufzugs erhöht werden.

Die erfindungsgemäße Codierungsvorrichtung dient zur Markierung von Positionen in einem Aufzugsschacht und zur Positionsbestimmung der Position von Aufzugkabinen im Aufzugschacht. Sie umfasst ein Codeband, welches beispielsweise im Aufzugsschacht an der Decke des Gebäudes aufgehängt und befestigt ist. Über eine Lagerungsvorrichtung ist das Codeband im Aufzugsschacht beweglich gelagert. Wenn sich das Gebäude beispielsweise setzt und zum Teil ineinander gestaucht wird, kann sich entsprechend das Codeband zusammen mit der Decke des Gebäudes nach unten bewegen und dennoch weiterhin frei hängen, weil es innerhalb der Lagerungsvorrichtungen beweglich gelagert ist und nicht festgehalten wird. Dementsprechend muss sich das frei hängende Codeband auch nicht beim Sich-Setzen des Gebäudes biegen oder stauchen. Die Markierungen sind diskret entlang der Länge des Codebands angeordnet und können beispielsweise äquidistant angebracht sein. Die Markierungen können als Barcode, besonders jedoch bevorzugt als 2D-Code (zweidimensionaler Code) ausgebildet sein. Ein derartiger 2D-Code erreicht optisch zum einen eine besonders vorteilhafte, vereinfachte Detektion, aber auch eine hohe Dichte an Codierungsmöglichkeiten.

Grundsätzlich kann ein Barcode in einer Zeile angeordnet werden, desgleichen kann aber auch entsprechend ein 2-D-Code (zweidimensionaler Code) vorgesehen sein. Ein 2-D-Code ist regelmäßig als Matrix ausgebildet, wobei die einzelnen Matrixelemente hell oder dunkel, das heißt die Werte 1 oder 0 bilden können. Eine oder mehrere Zeilen können eine diskrete Position als solche markieren. Besonders vorteilhaft ist an dieser Art der Markierungen, dass diese nicht nur einfach detektiert und ausgelesen werden können, sondern auch mittels eines Algorithmus dekodierbar sind und mathematisch verarbeitet werden können. Hierdurch wird ebenfalls der Vorteil erreicht, dass aufwendige Bildvergleiche mit Referenzmustern vermieden werden können, die zum einen fehleranfälliger sein können, zum anderen aber auch Rechner mit hoher graphischer Rechenleistung erfordern und zudem Speicher hoher Kapazität zur Abspeicherung der Referenzmuster notwendig machen. Gemäß der Erfindung kann der mathematische Algorithmus mit Hilfe eines Rechners gegebenenfalls sogar mittels eines einfachen Mikrocontrollers oder Mikroprozessors ausgewertet werden. Durch diesen Zeitvorteil wird auch ermöglicht, dass die Markierungen sehr rasch ausgewertet werden können, sodass auch bei hoher Markierungsdichte die Fahrkabine während ihrer Fahr im Aufzugschacht permanent über ihre Position informiert sein kann.

Die Markierungen umfassen einen Positionsmarker, aus dem die Position ausgelesen werden kann bzw. der die Position entlang des Codebands markiert. Insgesamt existiert ein Algorithmus, mit dem diese Decodierung vorgenommen werden kann und der auch umkehrbar ist. Insbesondere ist eine eindeutige Zuordnung einer Position zu einem Positionsmarker, gegebenenfalls auch zu einem Teil des Positionsmarkers, möglich. Die Lagerungsvorrichtung ist so angeordnet, dass sie mitdetektiert wird. Sie umfasst selbst eine Markierung, die ausgelesen werden und der eine Information entnommen werden kann. Wenn die Markierung einen Barcode oder 2D-Code umfasst, können diese zum Beispiel hinsichtlich der Anzahl ihrer Matrixelemente so ausgebildet sein, dass jede Markierung tatsächlich auch nur einer speziellen Position zugeordnet werden kann und nicht doppelt auf dem Codeband an verschiedenen Stellen auftritt. Die Markierungen, die unmittelbar an der Lagerungsvorrichtung angebracht sind, markieren jedoch zunächst keine Position auf dem Codeband, sondern unabhängig davon eine Position im Aufzugsschacht. Da es vorkommen kann, dass sich Gebäude mit der Zeit setzen, kann es zu Verschiebungen zwischen bestimmten Positionen im Aufzugsschacht und dem gelagerten Codeband geben.

Bei einer äquidistanten Anordnung gemäß einem Ausführungsbeispiel der Erfindung kann in besonders einfacher Weise die Auswertung erfolgen, weil der grundsätzliche Abstand zwischen zwei Markierungszeilen bekannt ist. Dies vereinfacht unter anderem zum Beispiel eine Extrapolation, welche angewandt wird, wenn zwei Positionen einschließlich eines zugehörigen Zeitstempels gespeichert sind und auf eine dritte Position aus einer weiteren Zeitangabe heraus geschlossen werden soll. Der Zeitstempel gibt jeweils Auskunft darüber, wann die entsprechende Position erreicht und ausgelesen wurde. Zur Durchführung der Extrapolation berücksichtigt das Auswerteverfahren beispielsweise die Geschwindigkeit oder den Geschwindigkeitsverlauf der Aufzugskabine in den entsprechenden Zeitintervallen.

Damit die Lagerungsvorrichtungen eindeutig als solche erkannt werden können, können diese insbesondere einfarbig in der Farbe einer Codefarbe ausgebildet sein. Zudem bietet es sich an, als Farbe beispielsweise eine dunkle Farbe, insbesondere Schwarz zu wählen. Bei einer Verschmutzung der Lagerungsvorrichtung könnte es ansonsten leichter zu Fehldetektionen kommen. Die einfarbige Ausbildung ermöglicht eine besonders einfache Zuordnung. Wenn eine Codefarbe verwendet wird, kann die Auswertung besonders einfach stattfinden, weil die Auswertevorrichtung beim Detektieren des Codebandes auch gleich die Lagerungsvorrichtung, sofern diese in das Detektionsfeld gerät, mit berücksichtigen kann und mit ausliest. Eine Unterscheidung, welcher Algorithmus angewendet werden muss, ist sodann nicht notwendig, weil für das Codeband und die Lagerungsvorrichtung im Grunde die gleichen Auswertevorschriften gelten.

Das erfindungsgemäße computerimplementierte Verfahren zur Bestimmung der Position der Aufzugskabine umfasst eine Bildaufbereitung sowie ein Analyseverfahren.

Das Bildaufbereitungsverfahren umfasst dabei folgende Schritte:
Es wird ein Abschnitt des Codebandes bzw. der Lagerungsvorrichtung mit einer optischen Detektionsvorrichtung als Pixelbild aus Pixeln aufgenommen, wobei der aufgenommene Abschnitt so groß gewählt wird, dass er wenigstens eine Zeile mehr umfasst als der Positionsmarker. Ferner umfasst die Bildaufbereitung den Schritt, dass das Pixelbild aufbereitet wird, insbesondere einem Erkennungsraster zugeordnet wird und vorzugsweise Pixel des Pixelbildes anhand ihrer Farbe bzw. Lage zusammengefasst werden, um den Barcode bzw. 3D-Code der Markierung auslesen zu können.

Das Analyseverfahren wiederum umfasst eine Positionsmusteranalyse, einen Prüfsummentest sowie einen Vollmustertest. Bei der Positionsmusteranalyse wird anhand des Teils der Markierung zur Kennzeichnung des Positionsmarkers der Positionsmarker erkannt. Dann wird anhand der Positionsmarker ein Positionscode im Erkennungsraster identifiziert, insbesondere als Bar- oder 2D-Code. Der Positionscode wird in einen Binärcode umgewandelt, sodann wird der Binärcode mittels eines Algorithmus decodiert und in eine Positionsangabe bzw. in die Information, ob eine Lagerungsvorrichtung detektiert wurde, umgewandelt. Das erste Teilverfahren bestehend aus der Bildaufbereitung sowie der Positionsmusteranalyse aus dem Analyseverfahren und kann während der Fahrt regelmäßig wiederholt werden, um fortlaufend

Positionsinformationen zu gewinnen.

Ferner umfasst das Analyseverfahren einen Prüfsummentest des Positionsmarkers, mit dem der Positionsmarker auf Plausibilität hin überprüft wird, indem eine Prüfsumme über den Binärcode oder/und die Graustufenwerte des Positionsmarkers gebildet und mit einem vorgegebenen Wert verglichen wird. Wird zum Beispiel Schwarz der Wert Null zugeordnet, kann die Prüfsumme entsprechend null sein. Da in der Regel aber auch bei einer Detektion eines schwarzen Bereichs oftmals ein dunkler Grauwert detektiert wird, kann der Schwellenwert entsprechend an diese Grauwerte angepasst werden, um unter realistischen Bedingungen eine zuverlässige Auswertung zu erhalten.

Zudem umfasst das Analyseverfahren einen Vollmustertest, wobei aus der codierten Positionsangabe anhand der Umkehrung des Algorithmus ein Barcode bzw. 2D-Code errechnet wird, welcher die wenigstens einen Zeile entspricht, die außerhalb des Positionsmarkers mit aufgenommen wurde und ein Vergleich dieses errechneten Bar- bzw. 2D-Codes mit der wenigstens einen aufgenommenen Zeile durchgeführt wird.

Gerade beim Extrapolationsverfahren ist es notwendig, dass aus einer Positionsangabe zusätzlich eine Zeitinformation zur Verfügung steht, sodass etwaige Rückschlüsse gezogen werden können, an welcher Position sich der Aufzug an einem vorgegebenen weiteren Zeitpunkt befindet. Dazu ist es notwendig, der Aufnahme eines Pixelbildes dem Zeitpunkt der Aufnahme zuzuordnen, also einen Zeitstempel zu geben.

### Ausführungsbeispiele

Ausführungsbeispiele der Erfindung sind in den Zeichnungen dargestellt und werden nachstehend unter Angabe weiterer Einzelheiten und Vorteile näher erläutert. Im Einzelnen zeigen:
- Figur 1: das Auslesen der Codierungsvorrichtung gem. der Erfindung durch einen optischen Detektor,
- Figur 2: eine schematische Darstellung einer Kameraaufnahme,
- Figur 3: ein Pixelstreifenpaar,
- Figur 4: ein erweitertes Bildmuster,
- Figur 5: ein Bildmuster,
- Figur 6: ein Positionsmuster,
- Figur 7: ein Gesamtschema des Computer-implementierten Verfahrens gem. der Erfindung,
- Figur 8: eine schematische Darstellung der Bildaufbereitung,
- Figur 9: eine schematische Darstellung des Analyseverfahren,
- Figur 10: eine schematische Darstellung des Vergleichsverfahrens, sowie
- Figur 11: eine schematische Darstellung des Korrelationsverfahrens.

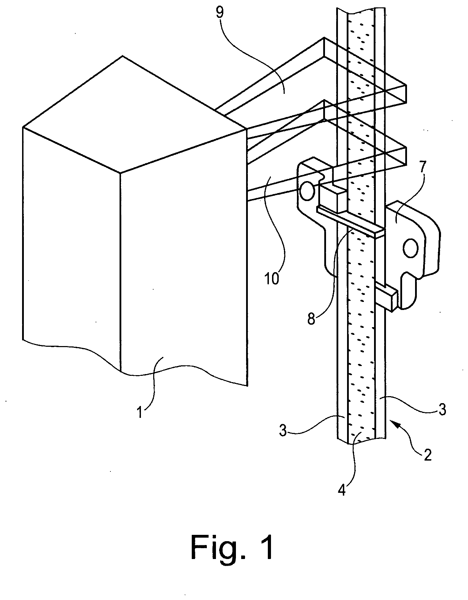

Figur 1 zeigt eine Detektionsvorrichtung 1, die ein Codeband 2 in einem Aufzugschacht ausliest. An den seitlichen Rändern des Codebands sind dazu Positionsstreifen 3 angebracht, die den 2-D-Code 4 seitlich begrenzen. Die Codierungsvorrichtung umfasst das Codeband 2 und eine Clip 7: Das Codeband 2 wird mit derartigen Clips 7 als Lagerungsvorrichtung beweglich gelagert, sodass es in Längsrichtung verschoben werden kann, wenn zum Beispiel das Gebäude sich mit der Zeit setzt. Der Clip 7 umfasst einen Steg 8, der den Code 4 bzw. die Positionsstreifen 3 übergreift. Die

Detektionsvorrichtung 1 umfasst im Grunde zwei Kameras, deren Detektionsstrahlen 9, 10 zur Aufnahme eines Detektionsbildes ebenfalls in Figur 1 dargestellt sind.

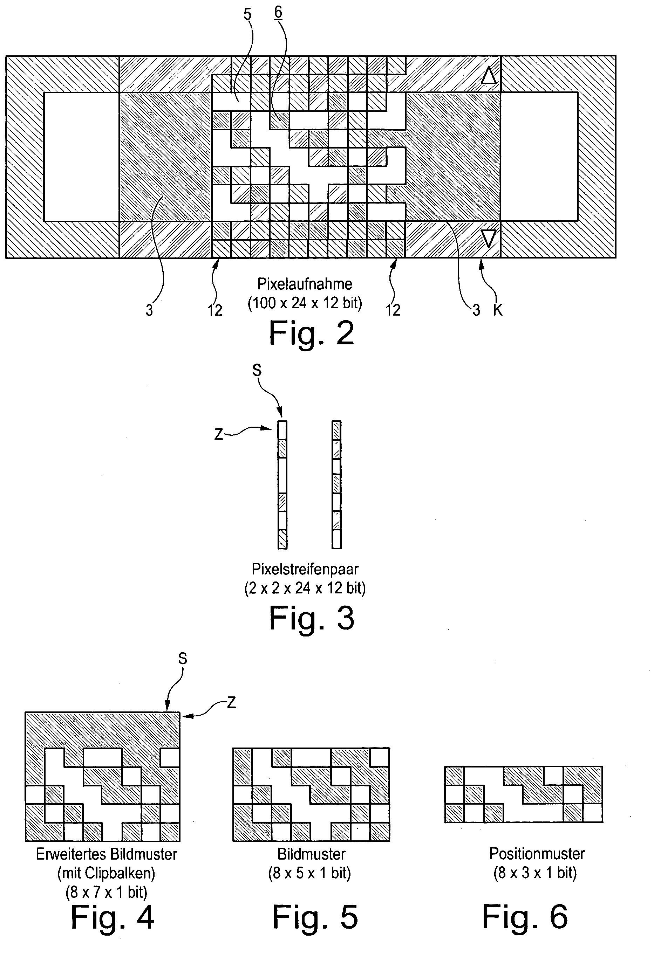

Figur 2 zeigt den aufgenommenen Bildausschnitt 1 der Kamera, der vom Codeband 2 aufgenommen wurde. Die Aufnahme 1 geht über den seitlichen Rand des Codebands 2 hinaus. An den äußeren Rändern des Codebands sind in Längsrichtung des Codebands 3 Positionsstreifen 3 angebracht. Diese sind vollständig schwarz ausgebildet und werden somit von der Detektionsvorrichtung und dem Auswerteverfahren einfach erkannt. Ebenso sorgen diese Positionsstreifen 3 für eine Rasterung, sodass beim Auswerteverfahren erkennbar ist, in welchem Bereich der 2D-Code 4 zu finden ist. Der 2D-Code setzt sich zusammen aus einer Matrix 4, die einzelne Matrixelemente 5, 6 aufweist. Das Matrixelement 5 ist ein helles, das Matrixelement 6 ein dunkles. Die Matrixelemente 5, 6 entsprechen jedoch im Allgemeinen nicht jeweils einem einzelnen Pixel der Kameraaufnahme. Daher ist es bei der Bildverarbeitung notwendig, aufgenommene Pixel gemäß ihrer Lage und ihrer Helligkeit einander zuzuordnen und zu einem Matrixelement zusammenzufassen. Im zusammengefassten Bild wiederum repräsentiert dann ein Pixel ein Matrixelement. In den Figuren 3 bis 6 werden durch Bildaufbereitung B aufbereitete Ausschnitte angegeben, bei denen Kamerapixel zu Matrixelementen aufbereitet wurden.

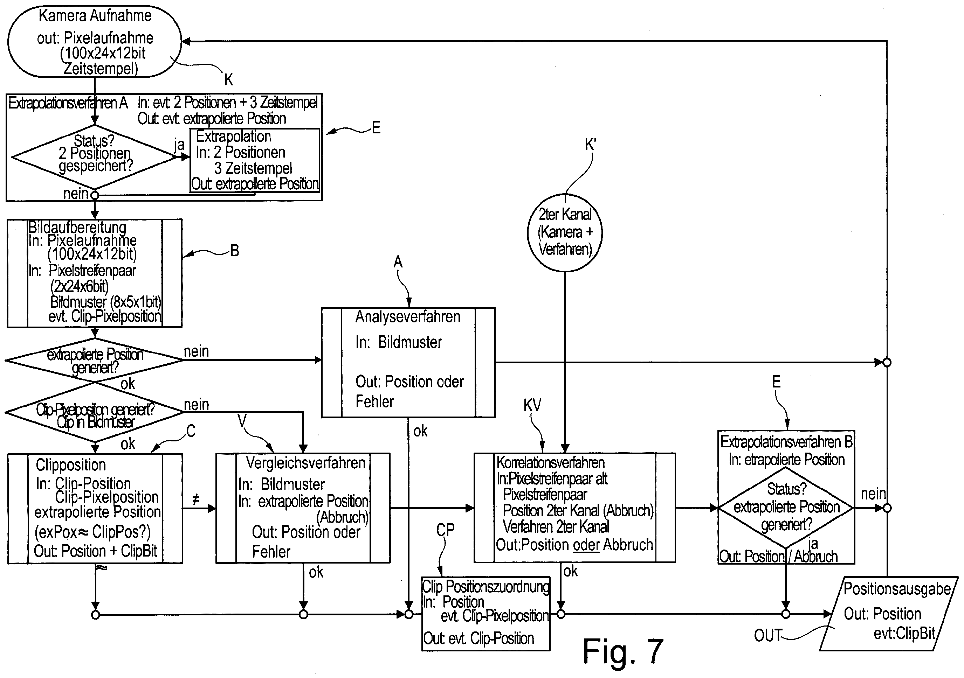

Eine Gesamtdarstellung eines Computer-implementierten Verfahrens zur Positionsbestimmung ist in Figur 7 dargestellt:

### Kameraaufnahme K

Die Detektionsvorrichtung 1 ermöglicht eine optische Detektion der am Codeband 2 angebrachten Markierungen 3, 4. Die Kamera (ggf. auch mehrere Kameras) arbeitet in der Regel im Infrarotbereich (IR-Licht, Wellenlänge ca. größer als 780 Nanometer bis 1 Millimeter), wodurch insbesondere auch störende Einflüsse vermieden werden können. Fährt die Kabine im Aufzugsschacht, in dem auch das Codeband 2 aufgehängt ist, so wird sie entlang des Codebands verfahren, wobei die Kamera so ausgerichtet ist, dass sie das Codeband entsprechend erfassen kann. Während der Fahrt macht die Kamera wiederholt immer wieder Aufnahmen K von Abschnitten des Codebands (insbesondere in gleichen Zeitabständen), vgl. Figur 2. Typischerweise kann eine derartige Pixelaufnahme 100 x 24 Pixel umfassen und als Graustufenbild (z.B. 12-Bit-Bild) aufgenommen werden. Gleichzeitig ist im vorliegenden Fall eine Uhr oder ein Timer vorgesehen, der je nach Kameraaufnahme einen Zeitstempel zuordnet, das heißt eine zeitliche Information, wann die Aufnahme erfolgt ist. Dieser Zeitstempel ermöglicht später eine Auswertung der Bilder, wenn weitere Informationen bekannt, das heißt zum Beispiel einzelne Positionen zu bestimmten Zeitpunkten, Geschwindigkeit der Aufzugkabine oder Beschleunigung der Aufzugkabine.

### Extrapolationsverfahren E

Ziel des Gesamtverfahrens aus Fig. 7 ist die Positionsbestimmung der Aufzugkabine, und zwar zu verschiedenen Zeitpunkten, wobei den einzelnen Positionen, wie bereits beschrieben, Zeitstempel mitgegeben werden können. In einem weiteren Verfahrensschritt wird nach der Kameraaufnahme K überprüft, ob in einem Speicher bereits zwei Positionen bestimmt wurden, zu denen auch zwei Zeitstempel vorliegen. Ist dies der Fall, kann zu einem weiteren, dritten Zeitpunkt die Position bestimmt werden (Extrapolation). Falls die Kabine keine gleichförmige Bewegung durchgeführt hat, kann die Extrapolation gegebenenfalls unter Berücksichtigung der aus der Kabinensteuerung bzw. -regelung bekannten Geschwindigkeit der Aufzugkabine bzw. Beschleunigung der Aufzugkabine erfolgen. Aus zwei Positionen und deren Zeitstempel, das heißt der zeitlichen Information, wann diese Positionen erreicht wurden, kann bei gleichförmiger Bewegung der Aufzugkabine deren Geschwindigkeit bestimmt werden. Ändert sich diese Geschwindigkeit nicht, so kann zu einem weiteren dritten Zeitpunkt entsprechend daraus die Position gewonnen werden. Beschleunigt die Aufzugkabine in dieser Zeit oder wird die Aufzugkabine in dieser Zeit abgebremst, so muss dies entsprechend berücksichtigt werden. Diese Angaben über die Beschleunigung und gegebenenfalls auch über die Geschwindigkeit können bei Ausführungsformen der Erfindung von der Kontrollvorrichtung der Fahrkabine (Steuerung oder Regelung) abgerufen bzw. ausgelesen werden. Sind nach Durchführung der Kameraaufnahme weniger als zwei Positionen gespeichert, wird zum nächsten Verfahrensschritt übergegangen, ohne dass eine Extrapolation stattfindet.

Die Voraussetzung, um das Extrapolationsverfahren E durchzuführen, ist es, dass wenigstens zwei Positionen und drei Zeitstempel gespeichert sind. Die beiden Positionen dienen dazu, eine Streckendifferenz zwischen den beiden Positionen bestimmen zu können. Sind zwei weitere Zeitstempel vorhanden, von denen jeweils einer einer der beiden Positionen zugeordnet ist, so kann auch die Zeitdifferenz, die nötig war, ausgehend von einer der beiden Positionen die andere zu erreichen, bestimmt werden. Der dritte Zeitstempel ist notwendig, um schließlich die weitere, zu extrapolierende Position bestimmen zu können. Vor der eigentlichen Durchführung des Extrapolationsverfahrens muss also geprüft werden, ob diese Voraussetzung erfüllt ist, dass insgesamt zwei Positionen gespeichert sind sowie drei Zeitstempel.

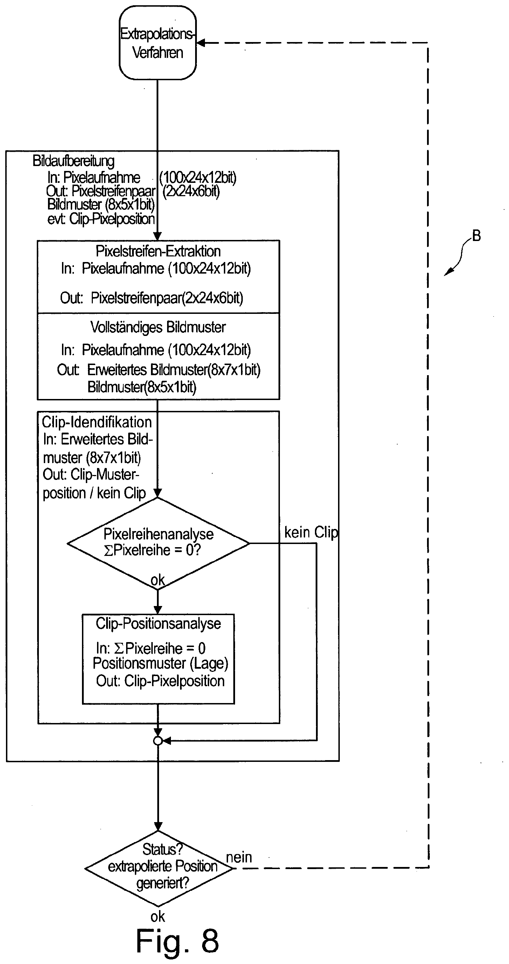

### Bildaufbereitung B (Fig. 8)

Der nächste Verfahrensschritt besteht aus einer Bildaufbereitung. Bei der Kameraaufnahme wurde ein Graustufenbild aufgenommen. Grundsätzlich ist es auch denkbar, sofort ein Schwarz-Weiß-Bild aufzunehmen, zumal der auf dem Codeband 2 aufgedruckte Code 4 als Barcode oder 2D-Code ausgebildet ist und somit grundsätzlich nur aus zwei Farben bzw. Helligkeiten besteht. Es muss allerdings berücksichtigt werden, dass durch Lichteinflüsse aus der Umgebung, Ablagerungen auf dem Codeband, geringe Unterschiede im Abstand oder in Detektionswinkel nicht immer exakt die gleichen Helligkeitswerte einer Oberfläche detektiert werden können.

Schwarze Flächen erscheinen sodann gegebenenfalls mehr oder weniger grau. Um diesen Effekt Rechnung tragen zu können, ist es vorteilhaft, ein Grauwertebild aufzunehmen und anhand der Farbe, hier anhand eines Schwellwertes einer Graustufe bzw. Helligkeit zu entscheiden, ob die detektierte Fläche oder das detektierte Pixel in Bezug auf einen Barcode oder einen 2D-Code einem dunklen oder einem hellen Bereich zuzuordnen ist. Gegebenenfalls kann dieser Schwellwert auch variabel gesetzt werden, sodass eine Nachjustierung ebenfalls grundsätzlich ermöglicht wird. Zum einen können somit die aufgenommenen Bilder grundsätzlich in ein 1-Bit-Bild umgewandelt werden. Zudem ist zu beachten, dass bei der Bildaufbereitung auch eine Art Bilderkennung oder Zuordnung zu einem Raster erfolgt.

Auf diese Weise können (im vorliegenden Fall) zwei 2 x 24 Pixel umfassende Pixelstreifen, deren Längserstreckung entlang der Spalten S verläuft, separiert werden (vgl. Fig. 3).

Des Weiteren werden ein Bildmuster und ein erweitertes Bildmuster erzeugt (Fig. 4 und 5). Das erweiterte Bildmuster ist in Figur 4 dargestellt und besteht aus 8 x 7 Matrixelementen in Schwarz-Weiß, das heißt 1-Bit-Darstellung. Bei diesen generierten Mustern werden die Matrixelemente zusammengefasst und in ihrer Größe reduziert jeweils als ein Pixel dargestellt. Das erweiterte Bildmuster gemäß Figur 4 besitzt deshalb mehr Zeilen Z als das Bildmuster gemäß Figur 5, weil, wie später erläutert wird, der Steg 8 einer Lagerungsvorrichtung 7 bzw. eines Clips drei Zeilen umfassen kann. Zudem umfasst jeder Positionsmarker, der die vollständige Information über eine einzelne Position besitzt, im vorliegenden Ausführungsbeispiel drei Zeilen. Für einzelne Auswerteverfahren können gegebenenfalls zusätzliche Zeilen benötigt werden.

Das einfache Bildmuster ist in Figur 5 dargestellt und besitzt lediglich fünf Zeilen, ebenfalls dargestellt in Schwarzweiß, also Einbitdarstellung. Das gesamte 2D-Matrixmuster umfasst zehn Spalten. Die äußere rechte und die äußere linke Spalte 11 dienen dazu, Positionsmarker, also zusammenhängende Bereiche der Matrix, die eine separate Position vollständig codieren, abzutrennen, das heißt zu markieren, wo diese anfängt und aufhört. Dies ist notwendig, damit bei zufälligem Aufnehmen eines Bildes klar ist, wo die Position markiert ist und nicht Teile zweier verschiedener Positionsmarker zusammen ausgewertet werden, was eine falsche Positionsangabe liefern könnte. Bei dem vorliegenden Ausführungsbeispiel sind die Zeilen der Matrix ohne Abstand zueinander angeordnet, was eine höhere Dichte der Markierungen ermöglicht.

Figur 6 zeigt ein Positionsmuster mit lediglich drei Zeilen, also ein Positionsmarker mit der vollständigen Codierung einer bestimmten Position.

Das Codeband ist, wie bereits oben beschrieben, in Lagerungsvorrichtungen zur beweglichen Lagerung des Codebandes, die an der Wand des Aufzugsschachts befestigt sind, beweglich gelagert. Diese so genannten Clips 7 umgreifen das Codeband 2 zur Aufzugkabine hin (mit dem Steg 8), also zur der Seite, an der sich die Markierung des Codebands befindet. Grundsätzlich verdeckt somit der Clip das Codeband teilweise. An dieser Stelle wäre also grundsätzlich bei einer Kameraaufnahme die Position nicht "erfassbar" sein. Daher ist es vorteilhaft, den Clip als solches zu erkennen. Besonders vorteilhaft ist die erfindungsgemäße Codierungsvorrichtung dahingehend, dass der Clip jedoch nicht als Bild erkannt werden muss, sondern dass er überraschenderweise zusammen mit dem Codeband ausgewertet werden kann. Dazu besitzt der Steg 8 des Clips, der über das Codeband ragt und detektiert wird, ein Codierungsmuster, das dem des Codebands entspricht, also ein Barcode oder ein 2D-Code.

Besonders vorteilhaft ist es, den auf dem Clip abgebildeten Code möglichst einfach zu gestalten, insbesondere in einer Farbe der Barcode- bzw. 2D-Code-Codierung, also schwarz oder weiß bzw. hell oder dunkel. Zum einen wird dadurch die Herstellung des Clips vereinfacht. Zum anderen kann der Clip dadurch einfach erkannt werden, was insbesondere vorteilhaft ist, weil das bauphysikalische Phänomen des Sich-Setzens von Gebäuden es mit sich bringen kann, dass sich der Clip relativ zum Codeband bewegt, wenn sich das Gebäude mit der Zeit setzt. Der Clip ändert sodann beim Sich-Setzen des Gebäudes seine relative Position zum Codeband. Daher ist es vorteilhaft, nur eine der Markierungen, nämlich entweder das Codeband oder den Clip mit einer absoluten Positionsangabe zu versehen, damit entsprechend ein Vergleich durchgeführt werden kann. Der Clip kann somit durch eine mathematische Analyse bzw. Durchführung eines Algorithmus gefunden werden. Diese Clipidentifikation erfolgt in der Bildaufbereitung über das erweiterte Bildmuster. Es erfolgt eine Pixelreinanalyse, in dem die Quersumme über die detektierten Matrixelemente gebildet wird. Beim vorliegenden Fall ist der Clip schwarz ausgebildet, wird also geprüft, ob die Quersumme über die Matrixelemente null ergibt. Ist dies der Fall, kann es sich nur um einen Clip handeln, da die Codierung so gewählt ist, dass andere Reihen nicht die Quersumme 0 besitzen können.

Da auch bekannt ist, wie viele Zeilen der Clip in Anspruch nimmt, zum Beispiel drei Zeilen, kann auch dessen Position bestimmt werden. Ist zum Beispiel am oberen Bildrand nur eine Zeile komplett schwarz, so wird sich der Clip entsprechend im oberen Bereich der Kameraaufnahme befinden. Sind alle Zeilen des Clips erkennbar, so befindet er sich an entsprechender Stelle in der Kameraaufnahme K. Durch einen vollständig abgebildeten Positionsmarker kann somit eine unmittelbar benachbarte Position zugeordnet werden. Ist bei einer Ausführungsform nicht mehr genügend Platz, um einen kompletten Positionsmarker zu erkennen, so muss gegebenenfalls über Extrapolation auf die Position des Clips geschlossen werden oder dieser einen entsprechenden Position zugeordnet werden. Es muss bei Detektion eines Clips nicht immer seine exakte Position zugeordnet werden; es genügt, den Clips immer in gleicher Weise eine Position zuzuordnen, beispielsweise mit einem konstanten Versatz, da in der Regel nur relative Abstände zwischen den Clips festgestellt werden müssen, um zum Beispiel festzustellen, wie stark ein Gebäude sich gesetzt hat. Im vorliegenden Fall wird beispielsweise die Unterkante des Clips hinsichtlich ihrer Position bestimmt.

### Clip-Position C:

In einem weiteren Verfahrensschritt wird festgestellt, ob überhaupt bereits eine extrapolierte Position generiert wurde. Ist dies der Fall, wird des Weiteren entschieden, ob ein Clip identifiziert werden konnte und eine Clip-Pixelposition erhalten worden ist. Ist dies ebenfalls zu bejahen, erfolgt als nächstes Teilverfahren die Bestimmung C der Clipposition (Figur 7). Mit Hilfe der bisherigen Information über die Clipposition wird mit Hilfe des Extrapolationsverfahrens E eine Position des Clips extrapoliert. Stimmt diese extrapolierte Position zumindest ungefähr mit der Clipposition überein, wird als Position die extrapolierte Position ausgegeben sowie gegebenenfalls zusätzlich eine Information, ob ein Clip vorhanden war oder nicht. Diese Information kann als 1-Bit-Information (Clipbit) ausgebildet sein. Schließlich wird dem Clip seine entsprechende Position zugeordnet (Verfahrensschritt CP) und ausgegeben. Die Clipposition selbst kann ebenfalls gespeichert werden und später für eine Korrektur benutzt werden, wenn sich das Gebäude gesetzt hat.

Ist der Aufzug beispielsweise gerade erst angefahren und wurden aus diesem Grund noch keine zwei Positionen gespeichert, so wird zunächst das so genannte Analyseverfahren A durchgeführt.

Wenn aus dem detektierten Positionsmuster eine Position gewonnen werden kann und teilweise zumindest ein Clipbalken detektiert wird, muss die exakte Position des Clipbalkens extrapoliert werden. Die Position des Clipbalkens ist dann in der Regel leicht gegenüber der detektierten Position verschoben. Wenn der Clipbalken das Positionsmuster vollständig überdeckt, kann gegebenenfalls aus den in der Vergangenheit gespeicherten Positionen die neue Position extrapoliert werden. Wenn beispielsweise der Clipbalken das Positionsmuster vollständig ausfüllt, kann beim vorliegenden Ausführungsbeispiel aus dem Clipbalken allein nicht auf dessen Position geschlossen werden, sodass diese aus den zuvor gespeicherten Daten zu extrapolieren ist.

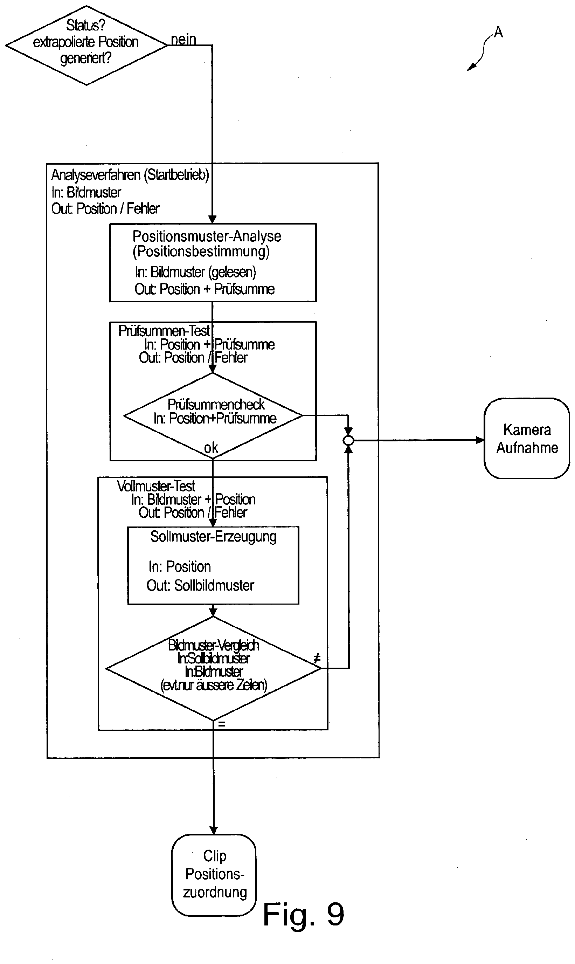

### Analyseverfahren A (Fig. 9)

Beim Analyseverfahren wird zunächst anhand des von der Kamera bestimmten Bildmusters ein Prüfsummentest vorgenommen, das heißt, es wird überprüft, ob die erfassten Matrixelemente eine spezielle Prüfsumme ergeben. Zudem wird anhand der Seitenränder 11 der Positionsmarker (Figur 6) bestimmt und mit Hilfe des vorgegebenen Algorithmus die Position des aufgenommenen Bildes bestimmt. Die errechnete Position dient im vorliegenden Fall dazu, anhand des Umkehrverfahrens des Algorithmus darauf zu schließen, welche weiteren Zeilen an den Positionsmarker angrenzen. Diese wurden ebenfalls mit von der Kamera aufgenommen. Sodann wird ein Vergleich vorgenommen, ob diese berechneten Muster auch mit dem der an die Positionsmarker angrenzenden Bereiche übereinstimmen. Diese Bereiche, die an den Positionsmarker angrenzen, müssen somit nicht extra zur Berechnung einer Position herangezogen werden. Je nachdem, wie viel von den oberen und unteren Randbereichen innerhalb der Kameraaufnahme K angezeigt wird, ist dies gegebenenfalls ohne Weiteres gar nicht möglich. Entsprechen diese generierten Codierungen den tatsächlich aufgenommenen Codierungen, so kann mit sehr hoher Wahrscheinlichkeit darauf geschlossen werden, dass die Positionsangabe tatsächlich zutrifft. Diese Position kann dann ausgegeben werden (Positionsausgabe OUT in Fig. 7), wobei gegebenenfalls auch eine zusätzliche Zuordnung der Clipposition erfolgen kann, wenn ein Clip detektiert wurde. Wurde eine extrapolierte Position generiert, aber kein Clip aufgenommen, so wird das Vergleichsverfahren durchgeführt.

Wie bereits erläutert, beinhaltet das Positionsmuster, welches gemäß Figur 6 drei Zeilen aufweist, die gesamte Positionsinformation. Das Analyseverfahren benutzt jedoch das Bildmuster, das zwei Zeilen mehr umfasst als das Positionsmuster. Aus dem Positionsmuster, auf das ein Umkehrverfahren des Algorithmus zur Positionsbestimmung angewendet werden kann, kann somit auf die beiden angrenzenden Zeilen geschlossen werden. Es wird also ein entsprechendes Soll-Bild-Muster erzeugt und mit dem tatsächlichen Bildmuster (vgl. Figur 5) verglichen. Bei einer Übereinstimmung handelt es sich bei der ermittelten Position mit hoher Wahrscheinlichkeit um die tatsächliche Position der Aufzugskabine. Wie in Figur 4 zu sehen, umfasst ein Clipbalken eine Breite von drei Zeilen, was der Größe nach einem Positionsmuster entspricht. Wenn der Clipbalken in einem Bildmuster erscheint, kann es also beispielsweise vorkommen, dass dieser abzüglich der oberen und unteren Zeile genau das herausgefilterte Positionsmuster bildet. Der Clip kann entsprechend als solcher detektiert werden, indem die Quersumme über die Grauwerte im Pixelbild gebildet und mit einem Grauwerte-Schwellenwert verglichen wird.

Beim Ausführungsbeispiel ist der Clipbalken schwarz. Da der Farbe Schwarz der Wert Null zugeordnet ist, ergibt dies im Idealfall die Quersumme null, weil lediglich schwarze Pixel detektiert wurden. In der Realität kann es jedoch vorkommen, dass statt einem idealen Schwarzwert ein dunkler Grauwert beispielsweise detektiert wird, sodass es in der Regel vorteilhaft ist, den Schwellwert nicht auf null, sondern auf einen bestimmten Schwellenwert in Abhängigkeit von den bei Detektion zu erwartenden Grauwerten abgestimmt wird. Ist der Clip nur teilweise im Positionsmuster, das aus dem Bildmuster, das aus dem Bildmuster gewonnen wird, enthalten, so ist dennoch aus den erkannten Zeilen und unter Berücksichtigung der Clip-Position ein Rückschluss auf die tatsächliche Position möglich. Bei dem vorliegenden Ausführungsbeispiel ist der Code so gewählt, dass jede Zeile tatsächlich völlig individuell ist und kein zweites Mal auf dem Codeband vorkommt. Wenn ein Clipbalken detektiert wird und nur ein Teil des Positionsmusters ausmacht, muss im vorliegenden Beispiel automatisch die oberste oder unterste Zeile des Bildmusters ebenfalls einen Teil des Clipbalkens bilden. Auch dies kann beim Vollmustertest des Analyseverfahrens berücksichtigt werden.

Das hohe Maß an Sicherheit ist gewährleistet, weil nicht nur die Detektion, die grundsätzlich fehlerbehaftet sein kann (sei es durch Verschmutzungen, zusätzliche Reflexion oder sonstige Fehldetektierungen) berücksichtigt wird, sondern weil auch anhand der Umkehrung des Algorithmus auf einen bislang noch nicht berücksichtigten Teil der Detektion zurückgegriffen und auf diesen rückgeschlossen wird.

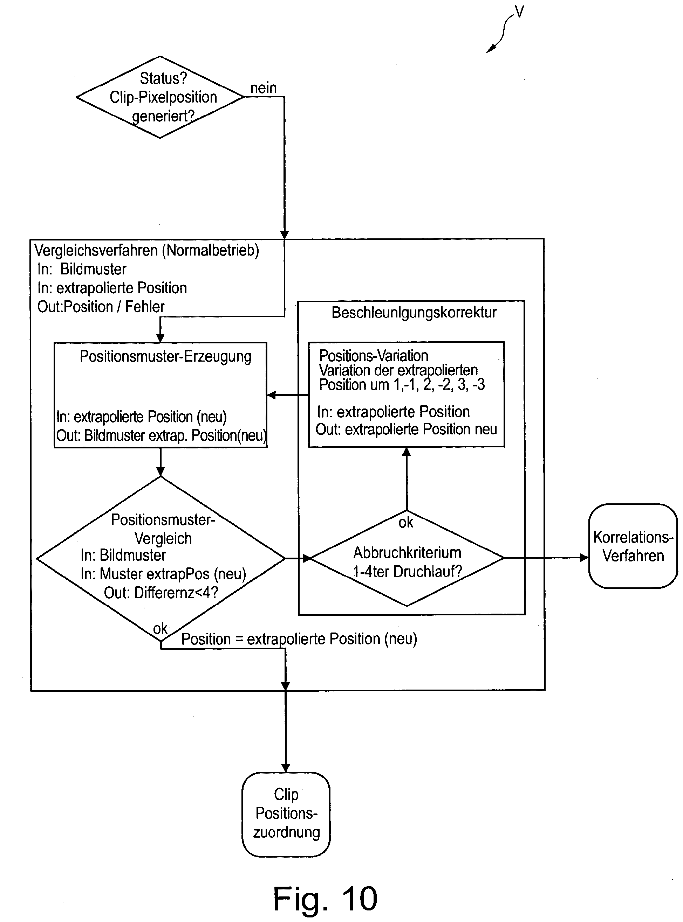

### Vergleichsverfahren V (Fig. 10)

Neben dem Bildmuster wird für das Vergleichsverfahren die extrapolierte Position benötigt (Fig. 7). Aus der extrapolierten Position allein wird das zu erwartende Bildmuster bestimmt und mit dem tatsächlich aufgenommenen verglichen. Stimmt der Vergleich exakt, so kann davon ausgegangen werden, dass tatsächlich die korrekte Position gefunden wurde, und die extrapolierte Position wird als Positionsangabe OUT ausgegeben. Es kann jedoch vorkommen, dass, obgleich die extrapolierte Position und die tatsächliche Position übereinstimmen, dennoch das aufgenommene Bild nicht richtig aufbereitet werden kann, weil zum Beispiel das Codeband an einzelnen Stellen verschmutzt ist oder weil andere störende Einflüsse eine Rolle gespielt haben. Ist der Code so gewählt, dass nicht von einer Zeile auf die nächste lediglich ein oder nur wenige Matrixelemente sich ändern, so kann eine geringe Abweichung bei wenigen Matrixelementen toleriert werden und dennoch davon ausgegangen werden, dass die extrapolierte Position tatsächlich vorliegt und der Aufgenommenen entspricht. Im vorliegenden Fall kann dies beispielsweise dann noch angenommen werden, wenn weniger als vier Matrixelemente abweichen. Dazu ist es besonders vorteilhaft, aus Sicherheitsgründen die Codierung so zu wählen, dass von einer Zeile Z auf die nächste diese stark abweichen kann. Beispielsweise kann der Algorithmus eine Verschlüsselung vorsehen, bei in Abhängigkeit von der Position der Zeile die Matrixelemente in vorgegebener Weise vertauscht werden, was einfach nachvollzogen werden kann, wenn der Algorithmus bekannt. Ist die Abweichung jedoch zu groß, so kann ein Verfahren mit einer Beschleunigungskorrektur durchgeführt werden. Insbesondere dann, wenn die Aufzugkabine während ihrer Fahrt beschleunigt bzw. abgebremst wird, treten hinsichtlich der Extrapolation Unsicherheiten auf, da diese Geschwindigkeitsänderungen im Zeitverlauf genau erfasst werden müssten und die Geschwindigkeit über Integration der Beschleunigung über die Zeit zu erfassen wäre. Dies kann in der Regel aus technischen Gründen nicht so genau vorgenommen werden, dass keine Abweichungen denkbar wären, zumal die Markierungen in einem Abstand von einem halben Millimeter beispielsweise angebracht sind.

Gegebenenfalls wird eine Beschleunigungskorrektur mit einer Art Positionsvariation durchgeführt, wozu zunächst ebenfalls die extrapolierte Positionsangabe benötigt wird. Auf der extrapolierten Positionsangabe, die berechnet worden ist, wird nun das Bildmuster erzeugt und die weiteren Zeilen, die unmittelbar an den Positionsmarker des erzeugten Bildmusters angrenzen. Das aufgenommene Muster wird somit mit Bildmustern verglichen, die ein, zwei oder drei Zeilen oberhalb des Bildmusters zu finden sind, da es der extrapolierten Positionsangabe entspricht. Existiert das aufgenommene Bildmuster in diesem Bereich, so kann davon ausgegangen werden, dass die Positionsbestimmung innerhalb einer tolerierbaren Grenze abgewichen ist und die extrapolierte Position ist die ausgegebene Position. Wenn auch dieser Vergleich zu keinem Ergebnis führt, wird ein Korrelationsverfahren durchgeführt. Dazu wird das aus Figur 3 bekannte Pixelstreifenpaar eingesetzt.

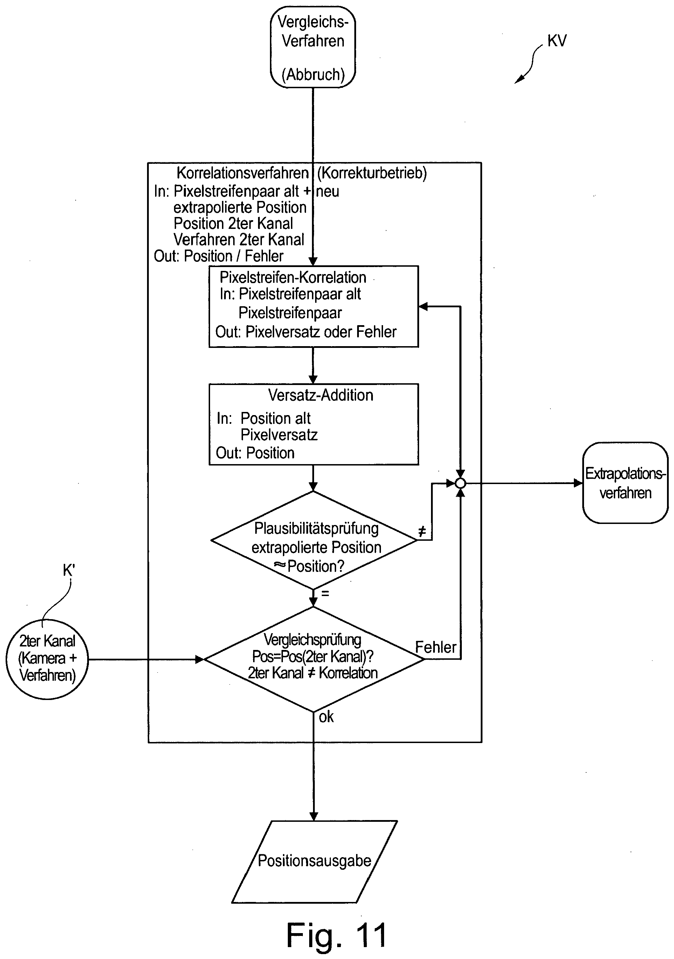

### Korrelationsverfahren KV (Fig. 11)

Benötigt wird zunächst das erzeugte Pixelstreifenpaar (siehe Fig. 3), und zwar jeweils ein aktuelles und ein zuvor während der Fahrt aufgenommenes Muster. Diese Pixelstreifen, die zu verschiedenen Zeiten aufgenommen wurden, werden gewissermaßen übereinander gelegt und verschoben, bis eine Übereinstimmung zustande kommt. Dabei wird entsprechend der Versatz bestimmt. Anhand der extrapolierten Position kann zusätzlich eine Plausibilitätsprüfung durchgeführt werden. Da die Detektionsvorrichtung insgesamt zwei Kameras umfasst, kann beim Korrelationsverfahren KV noch ein zweiter Vergleich mit einer zweiten Kamera (zweites Kamerabild K' in Figur 7) durchgeführt werden und auf Stimmigkeit hin untersucht werden. Wenn auch dieses Korrelationsverfahren KV zu keinem einheitlichen Ergebnis führt, kann ein weiteres Extrapolationsverfahren E noch einmal durchgeführt werden, das analog zum oben Beschriebenen verläuft. Wenn auch dies zu keinem Ergebnis führt, muss eine neue Kameraaufnahme durchgeführt werden, da keine Position bestimmt werden kann. Gegebenenfalls wird dann, wenn gar keine Position bestimmt werden kann, ein Notfall ausgegeben.

Grundsätzlich ist es auch denkbar, insbesondere das Analyseverfahren, das Vergleichsverfahren oder das Korrelationsverfahren in anderer Weise miteinander, z.B. in anderer Reihenfolge, zu kombinieren.

### Bezugszeichenliste:

- 1: Detektionsvorrichtung
- 2: Codeband
- 3: Positionsstreifen
- 4: 2D-Code
- 5: Matrixelement
- 6: Matrixelement
- 7: Clip
- 8: Steg
- 9: Detektionsausleuchtung
- 10: Detektionsausleuchtung
- 11: Markierungsspalten
- A: Analyseverfahren
- B: Bildaufbereitung
- C: Bestimmung der Clippositon
- CP: Clip-Positionszuordnung
- E: Extrapolationsverfahren
- K: Kameraaufnahme
- K': zweite Kameraaufnahme
- KV: Korrelationsverfahren
- V: Vergleichsverfahren
- OUT: Positionsausgabe

## Patentansprüche

1. Codierungsvorrichtung zur Markierung von Positionen in einem Aufzugschacht und zur Positionsbestimmung der Position von Aufzugkabinen im Aufzugschacht, welche ein Codeband (2) umfasst, wobei:
- das Codeband (2) wenigstens drei Markierungen aufweist, die entlang der Länge des Codebands angeordnet sind, um jeweils diskrete Positionen zu markieren,
- die Markierungen als Barcode und/oder 2-D-Code (4) ausgebildet sind,
- die Markierungen so angeordnet sind, dass sie Zeilen ausbilden und insbesondere wenigstens so viele Zeilen wie zu markierende diskrete Positionen vorhanden sind,
- die Markierungen so ausgebildet sind, dass sie für jede zu markierende diskrete Position einen Positionsmarker umfassen,
- die Markierungen mittels eines Algorithmus decodierbar sind, wobei insbesondere eine mathematische Funktion existiert, die jeder Markierung einer Position eindeutig die entsprechende Position zuordnet,
- wenigstens eine Lagerungsvorrichtung (7, 8) zur beweglichen, insbesondere längsbeweglichen Lagerung des Codebands (2) im Aufzugschacht vorgesehen ist, welche dazu ausgebildet ist, das Codeband wenigstens teilweise, vorzugsweise vollständig, zu umgreifen und welche derart ausgebildet ist, dass sie eine Markierung, insbesondere einen Barcode und/oder 2-D-Code trägt, der so angeordnet ist, dass er bei Umgreifen des Codebands (2) auslesbar mindestens einen Teil der Markierung des Codebands abdeckt.

2. Codierungsvorrichtung nach Anspruch 1, **dadurch gekennzeichnet, dass** die Markierungen so angeordnet sind, dass sie wenigstens zwei Spalten ausbilden.

3. Codierungsvorrichtung nach einem der vorgenannten Ansprüche, **dadurch gekennzeichnet, dass** die Positionsmarker so ausgebildet sind, dass eine diskrete Position in wenigstens zwei Zeilen codiert ist.

4. Codierungsvorrichtung nach einem der vorgenannten Ansprüche, **dadurch gekennzeichnet, dass** ein Teil der Markierung (11) zur Kennzeichnung der Positionsmarker ausgebildet ist.

5. Codierungsvorrichtung nach einem der vorgenannten Ansprüche, **dadurch gekennzeichnet, dass** die Markierungen ohne Abstand und/oder äquidistant auf dem Codeband (2) angebracht sind.

6. Codierungsvorrichtung nach einem der vorgenannten Ansprüche, **dadurch gekennzeichnet, dass** die Lagerungsvorrichtung einen Steg (8) umfasst, um das Codeband (2) an der Seite zu übergreifen, auf der die Markierungen angebracht sind und/oder die einer Detektionsvorrichtung (1) zuzuwenden sind.

7. Codierungsvorrichtung nach einem der vorgenannten Ansprüche, **dadurch gekennzeichnet, dass** die Markierungen der wenigstens einen Lagerungsvorrichtung auf dem Steg (8) angebracht und insbesondere ausschließlich einfarbig ausgebildet sind, vorzugsweise in genau einer der beiden Farben des Barcodes und/oder 2-D-Codes, vorzugsweise der dunkleren Codefarbe entspricht, besonders bevorzugt schwarz ist.

8. Computer-implementiertes Verfahren zur Bestimmung der Position einer Aufzugkabine in einem Aufzugschacht anhand einer Codierungsvorrichtung nach einem der vorgenannten Ansprüche, wobei folgende Schritte eines ersten Teilverfahrens durchgeführt werden, indem:
- ein Abschnitt des Codebands (2) und/oder der Lagerungsvorrichtung (7, 8) mit einer optischen Detektionsvorrichtung als Pixelbild (K) aus Pixeln aufgenommen wird/werden, wobei der aufgenommene Abschnitt (K) so groß gewählt wird, dass er wenigstens eine Zeile mehr umfasst als der Positionsmarker,
- das Pixelbild aufbereitet wird, insbesondere einem Erkennungsraster zugeordnet wird, vorzugsweise Pixel des Pixelbildes anhand ihrer Farbe und/oder Lage zusammengefasst werden, um den Barcode und/oder 2-D-Code (4) der Markierung auslesen zu können,
- anhand des Teils (11) der Markierung zur Kennzeichnung des Positionsmarkers der Positionsmarker erkannt wird,
- anhand der Positonsmarker ein Positionscode im Erkennungsraster identifiziert wird, insbesondere als Barcode und/oder 2-D-Code,
- der Positionscode in einen Binärcode umgewandelt wird,
- der Binärcode mittels eines Algorithmus decodiert und in eine Positionsangabe und/oder in die Information, ob eine Lagerungsvorrichtung detektiert wurde, umgewandelt wird,
- wobei das erste Teilverfahren in bestimmten, vorzugsweise gleichen Zeitabständen einer Fahrt der Aufzugkabine wiederholbar ist,
und wobei ein weiteres Teilverfahren durchgeführt wird, bei dem:
- ein Prüfsummentest des Positionsmarkers durchgeführt wird, mit dem der Positionsmarker auf Plausibilität hin überprüft wird, indem eine Prüfsumme über den Binärcode und/oder die Graustufenwerte des Positionsmarkers gebildet und mit einem vorgegebenen Wert verglichen wird,
- aus der decodierten Positionsangabe anhand der Umkehrung des Algorithmus ein Barcode und/oder 2-D-Code errechnet wird, welcher der wenigstens einen Zeile entspricht, die außerhalb des Positionsmarkers mit aufgenommen wurde und ein Vergleich dieses errechneten Barcode und/oder 2-D-Codes mit der wenigstens einen aufgenommenen Zeile durchgeführt wird.

9. Computer-implementiertes Verfahren nach Anspruch 8, **dadurch gekennzeichnet, dass** bei der Aufnahme des Pixelbildes (K) der Zeitpunkt der Aufnahme gemessen und dem Pixelbild zugeordnet wird.

10. Computer-implementiertes Verfahren nach einem der Ansprüche 8 bis 9, **dadurch gekennzeichnet, dass** die optische Detektion des Abschnitts (K) als Graustufenaufnahme erfolgt.

11. Computer-implementiertes Verfahren nach einem der Ansprüche 8 bis 10, **dadurch gekennzeichnet, dass** die Graustufenaufnahme (K) anhand eines Graustufenschwellwertes in ein Schwarz-Weiß-Bild und/oder ein 1-Bit-Bild umgewandelt wird.

12. Computer-implementiertes Verfahren nach einem der Ansprüche 8 bis 11, **dadurch gekennzeichnet, dass** im Betrieb die optischen Detektionen (K) wiederholt in gleichen Zeitabständen durchgeführt werden.

13. Positionsbestimmungsvorrichtung zur Bestimmung der Position einer Aufzugkabine in einem Aufzugschacht, umfassend: eine Detektionsvorrichtung (1) zum optischen Auslesen der Markierungen des Codebands, eine Codierungsvorrichtung nach einem der Ansprüche 1 bis 7 sowie einen Rechner zur Durchführung eines Computer-implementierten Verfahrens nach einem der Ansprüche 8 bis 12.

## Claims

1. A coding device for marking positions in a lift shaft and for determining the position of lift cars in the lift shaft, comprising a code band (2), wherein:
- the code band (2) comprises at least three markings which are disposed along the length of the code band in order to mark discrete positions in each case,
- the markings are formed as a barcode and/or 2D code (4),
- the markings are disposed in such a way that they form rows and, in particular, at least as many rows are provided as there are discrete positions to be marked,
- the markings are formed in such a way that they comprise a position marker for each discrete position to be marked,
- the markings are decodable by means of an algorithm, wherein, in particular, a mathematical function exists which uniquely assigns to each marking of a position the corresponding position,
- at least one mounting device (7, 8) is provided for movable, in particular longitudinally movable, mounting of the code band (2) in the lift shaft, which mounting device is designed to encompass the code band at least partially, preferably completely, and is designed in such a way that it bears a marking, in particular a barcode and/or a 2D code, disposed in such a way that it covers at least a part of the marking of the code band in a readable manner when the code band (2) is encompassed.

2. The coding device as claimed in claim 1, **characterised in that** the markings are disposed in such a way that they form at least two columns.

3. The coding device as claimed in any one of the preceding claims, **characterised in that** the position markers are formed in such a way that a discrete position is coded in at least two rows.

4. The coding device as claimed in any one of the preceding claims, **characterised in that** a part of the marking (11) is formed to characterise the position markers.

5. The coding device as claimed in any one of the preceding claims, **characterised in that** the markings are attached without spacing and/or equidistantly on the code band (2).

6. The coding device as claimed in any one of the preceding claims, **characterised in that** the mounting device comprises a web (8) in order to overlap the code band (2) on the side on which the markings are attached and/or which are to face a detection device (1).

7. The coding device as claimed in any one of the preceding claims, **characterised in that** the markings of the at least one mounting device are attached on the web (8) and, in particular, are formed in only one colour, preferably in precisely one of the two colours of the barcode and/or 2D code, preferably corresponding to the darker code colour, particularly preferably being black.

8. A computer-implemented method for determining the position of a lift car in a lift shaft using a coding device as claimed in any one of the preceding claims, wherein the following steps of a first partial method are carried out, in that:
- a portion of the code band (2) and/or of the mounting device (7, 8) is/are captured with an optical detection device as a pixel image (K) consisting of pixels, wherein the captured portion (K) is selected to be of such a size that it comprises at least one more row than the position marker,
- the pixel image is processed, in particular is assigned to a recognition grid, pixels of the pixel image preferably being combined by means of their colour and/or position in order to be able to read the barcode and/or 2D code (4) of the marking,
- the position marker is recognised using the part (11) of the marking for characterising the position marker,
- by means of the position markers a position code in the recognition grid is identified, in particular as a barcode and/or 2D code,
- the position code is converted to a binary code,
- the binary code is decoded by means of an algorithm and is converted into a position indication and/or into the information as to whether a mounting device has been detected,
- wherein the first partial method is repeatable at certain, preferably equal, time intervals of a journey of the lift car, and wherein a further partial method is carried out, in which:
- a check sum test of the position marker is carried out with which the position marker is checked for plausibility in that a check sum is formed in respect of the binary code and/or the grayscale values of the position marker and compared with a preset value,
- a barcode and/or 2D code is calculated from the decoded position indication using the inverse of the algorithm, which code corresponds to at least one row which was also captured outside the position marker, and a comparison is carried out of this calculated barcode and/or 2D code with the at least one captured row.

9. The computer-implemented method as claimed in claim 8, **characterised in that** during capture of the pixel image (K) the moment of capture is measured and assigned to the pixel image.

10. The computer-implemented method as claimed in any one of claims 8 to 9, **characterised in that** the optical detection of the portion (K) is carried out as a grayscale capture.

11. The computer-implemented method as claimed in any one of claims 8 to 10, **characterised in that** the grayscale capture (K) is converted into a black and white image and/or a 1-bit image with the aid of a grayscale threshold value.

12. The computer-implemented method as claimed in any one of claims 8 to 11, **characterised in that** the optical detections (K) are carried out repeatedly at equal time intervals during operation.

13. A position-determining device for determining the position of a lift car in a lift shaft, comprising: a detection device (1) for optically reading the markings of the code band, a coding device as claimed in any one of claims 1 to 7 and a computer for carrying out a computer-implemented method as claimed in any one of claims 8 to 12.

## Revendications

1. Dispositif de codage destiné à marquer des positions dans une cage d'ascenseur et à déterminer la position de cabines dans la cage d'ascenseur, qui comprend une bande de code (2) :
- la bande de code (2) comportant au moins trois marquages qui sont disposés sur toute la longueur de la bande de code pour marquer respectivement des positions individuelles,
- les marquages étant conçus sous forme de code-barres et/ou de code 2D (4),
- les marquages étant disposés de telle sorte qu'ils forment des lignes et notamment il y a au moins autant de lignes que de positions individuelles à marquer,
- les marquages étant conçus de telle sorte qu'ils comprennent pour chaque position individuelle à marquer un marqueur de position,
- les marquages pouvant être décodés à l'aide d'un algorithme, il existe en particulier une fonction mathématique qui associe chaque marquage d'une position clairement à la position correspondante,
- au moins un dispositif de logement (7, 8) sert à loger de manière mobile en particulier longitudinalement la bande de code (2) dans la cage d'ascenseur, qui est réalisé pour au moins partiellement, de préférence entièrement entourer la bande de code et qui est conçu de façon à porter un marquage, en particulier un code-barres et/ou un code 2D, qui est disposé de façon à recouvrir de manière lisible au moins une partie du marquage de la bande de code lorsqu'il entoure la bande de code (2).

2. Dispositif de codage selon la revendication 1, **caractérisé en ce que** les marquages sont disposés de façon à former au moins deux colonnes.

3. Dispositif de codage selon l'une des revendications précédentes, **caractérisé en ce que** les marqueurs de position sont conçus de manière à ce qu'une position individuelle soit codée dans au moins deux lignes.

4. Dispositif de codage selon l'une des revendications précédentes, **caractérisé en ce qu'**une partie du marquage (11) est conçue pour identifier les marqueurs de position.

5. Dispositif de codage selon l'une des revendications précédentes, **caractérisé en ce que** les marquages sont appliqués sans écart et/ou à équidistance sur la bande de code (2).

6. Dispositif de codage selon l'une des revendications précédentes, **caractérisé en ce que** le dispositif de logement comprend un élément jointif (8) pour s'étendre autour de la bande de code (2) sur le côté sur lequel sont appliqués les marquages et/ou qui doivent se tourner vers un dispositif de détection (1).

7. Dispositif de codage selon l'une des revendications précédentes, **caractérisé en ce que** les marquages de l'au moins un dispositif de logement sont appliqués sur l'élément jointif (8) et sont en particulier exclusivement d'une seule couleur, correspondant de préférence à exactement une des deux couleurs du code-barres et/ou du code 2D, de préférence à la couleur de code la plus foncée, de préférence encore au noir.

8. Procédé mis en oeuvre par ordinateur destiné à déterminer la position d'une cabine d'ascenseur dans une cage d'ascenseur au moyen d'un dispositif de codage selon l'une des revendications précédentes, les étapes suivantes d'un premier procédé partiel étant exécutés comme suit :
- une partie de la bande de code (2) et/ou le dispositif de logement (7, 8) doté d'un dispositif de détection optique est/sont enregistré(e)s en tant qu'image pixellisée (K) à partir de pixels, la taille de la partie enregistrée (K) étant sélectionnée de sorte que la partie comprenne une ligne de plus que le marqueur de position,
- l'image pixellisée est préparée, en particulier est associée à une trame de détection, de préférence les pixels de l'image pixellisée sont regroupés en fonction de leur couleur et/ou de leur position pour pouvoir lire le code-barres et/ou le code 2D (4) du marquage,
- au moyen de la partie (11) du marquage destinée à identifier le marquage de position, le marqueur de position est détecté,
- au moyen du marqueur de position, un code de position est identifié dans la trame de détection, en particulier en tant que code-barres et/ou code 2D,
- le code de position est converti en un code binaire,
- le code binaire est décodé au moyen d'un algorithme et converti en une indication de position et/ou en l'information indiquant si un dispositif de logement a été détecté,
- le premier procédé partiel peut être répété à des intervalles de temps déterminés, de préférence identiques d'une course de la cabine d'ascenseur et un autre procédé partiel étant exécuté, selon lequel :
- on réalise un essai de somme de contrôle du marqueur de position qui vérifie la plausibilité du marqueur de position en formant une somme de contrôle sur le code binaire et/ou les valeurs d'échelle de gris du marqueur de position et qui est comparée à une valeur prédéfinie,
- à partir de l'indication de position décodée au moyen de l'inversion de l'algorithme un code-barres et/ou un code 2D est calculé qui correspond à l'au moins une ligne qui a été enregistrée à l'extérieur du marqueur de position et on compare ledit code-barres et/ou le code 2D calculé avec l'au moins une ligne enregistrée.

9. Procédé mis en oeuvre par ordinateur selon la revendication 8, **caractérisé en ce que** lors de l'enregistrement de l'image pixellisée (K) le moment de l'enregistrement est mesuré et associé à l'image pixellisée.

10. Procédé mis en oeuvre par ordinateur selon l'une des revendications 8 à 9, **caractérisé en ce que** la détection optique de la partie (K) s'effectue en tant que prise de vue d'échelle de gris.

11. Procédé mis en oeuvre par ordinateur selon l'une des revendications 8 à 10, **caractérisé en ce que** la prise de vue d'échelle de gris (K) est convertie en une image noir et blanc et/ou une image 1 bit au moyen d'une valeur seuil d'échelle de gris.

12. Procédé mis en oeuvre par ordinateur selon l'une des revendications 8 à 11, **caractérisé en ce qu'**en fonctionnement les détections optiques (K) sont répétées aux mêmes intervalles de temps.

13. Dispositif de détermination de la position d'une cabine d'ascenseur dans une cage d'ascenseur, comprenant : un dispositif de détection (1) destiné à lire optiquement les marquages de la bande de code, un dispositif de codage selon l'une des revendications 1 à 7 ainsi qu'un calculateur destiné à exécuter le procédé mis en oeuvre par ordinateur selon l'une des revendications 8 à 12.
